# EUROPEAN PATENT SPECIFICATION

(11) **EP 2 486 169 B1**
(45) Date of publication and mention of the grant of the patent: **05.03.2014**
(21) Application number: 09737475.5
(22) Date of filing: 06.10.2009
(51) Int. Cl.: C25B 1/04, H02J 15/00, H01M 8/06

(54) **CLEAN-ENERGY SYSTEM**
SYSTEM FÜR SAUBERE ENERGIE
SYSTÈME DE PRODUCTION D'ÉNERGIE PROPRE

(43) Date of publication of application: 15.08.2012
(73) Proprietor: Greve Moltke, Christian Georg Peter, 4690 Haslev (DK)
(72) Inventor: DOLMER, Anders, DK-4690 Haslev (DK)
(74) Representative: Roerboel, Leif
(86) International application number: PCT/IB2009/054369
(87) International publication number: WO 2011/042771

(56) References cited:
- WO-A1-01/12755
- WO-A1-2008/115933
- DE-A1- 3 840 517
- DE-A1- 19 857 870
- US-A1- 2007 029 264
- US-A1- 2007 079 611
- US-A1- 2008 245 660
- US-A1- 2009 048 716

## Description

### TECHNICAL FIELD OF THE INVENTION

The present invention generally relates the buffering of electrical energy from an intermittent energy source. More specifically, the present invention relates to the optimizing of the efficiency of an electrical energy buffering with regard to use of inputs and outputs, environmental load, and buffering capacity.

### BACKGROUND OF THE INVENTION

Several of the renewable or sustainable energy sources available today are irregular in their supply, in particular if they depend directly on varying natural phenomena, such as wind and solar power. These energy sources commonly fail to deliver peak power when the demand is the highest It can even be the case that the peak power can be delivered when the demand for power is the lowest, e.g. wind power during night-time. Hence, there is need for a method to store the energy produced by an intermittent energy source. For example, a farmer owns a windmill and green-house that is heated electrically. At moderate to high wind speeds the windmill produces surplus electrical energy after heating the green-house. However, at low wind speeds the windmill does not produce sufficient energy for heating the green-house. However, at present there is no efficient method for locally store the surplus electrical energy and retrieve it later when there is a need.

There is a general problem in handling biological waste without contributing negatively to the environment, both locally and globally. Locally the degradation of biological waste can result disturbing odours, e.g. from pig manure. Globally the degradation of biological waste contributes to the green-house effect. In the presence of oxygen, the biological waste produces carbon dioxide, while in the absence of oxygen it produces methane, which is a much more efficient green-house gas than carbon dioxide. If this degradation is not contained and controlled, the chemical energy intrinsic to the biological waste is lost. Further, there is also a need for a replacement of fossil fuels as a source for electrical energy production, as this is not a sustainable or environmentally friendly energy source.

There are a number of methods and systems for extracting energy from biological waste. However, they are limited in their overall efficiency, in particular with regard to utilizing also the surplus heat and rest products produced. A system for extracting energy in the form of hydrogen from biological waste is described in "Large Renewables - Hydrogen Energy Systems: Gathering and Transmission Pipelines for Windpower and other Diffuse, Dispersed Sources", by Leighty et al., conference proceedings for World Gas Conference, 2003. The system is optimized for large scale energy transport, not local or regional energy buffering. Further, it lacks an overall energy balance taking the generated surplus heat and all residual outputs into account, thereby decreasing the over-all efficiency and buffering capacity of the system.

WO2005/005312 describes a system having the ability to function as a buffer for buffering electrical energy from the intermittent energy source by way of treating biological waste. However, the system is optimized for co-producing hydrogen and lacks an overall energy balance taking the generated surplus heat and the residual outputs from the biological waste into account. Hence, the system is not efficient with regard to the overall entropy, in particular to the residual outputs having a biological use or value.

Document US 2008 245 660 discloses a method for accumulating electrical energy with the steps in the preamble of independent method claim 1.

### OBJECTS OF THE INVENTION

According to the present invention, an efficient buffering of electrical energy can be achieved with a small negative effect, or even a positive' overall effect, on the environment. Also according to the present invention, a high buffering capacity of an electrical energy buffering system can be achieved. A particular feature of the present invention is a feedback or reuse of surplus heat within the electrical energy buffering system. One advantage with this feature is that a high efficiency of the electrical energy buffering system is achieved with regard to the the inputs of the system. A further object of the present invention is to achieve a high overall efficiency with regard to all the inputs and all the outputs of an electrical energy buffering system.

### SUMMARY/DISCLOSURE OF THE INVENTION

In addition to the above advantages numerous advantages will be evident from the general and detailed descriptions given below of preferred embodiments according to the present invention which is defined by independent method claim 1 and by the energy buffering plant in claim 9.

The intermittent electrical energy source may be a renewable energy source, such as a wind mill, solar cell, a hydropower plant, or a wave power plant. By nature, these energy sources are unstable. This allows for the proposed method to function as a carbon sink with regard to carbon dioxide in the atmosphere. The intermittent electrical energy source delivers the input electrical energy directly to the energy buffering plant, which allows for a plant that is independent of the local or national electrical power grid, and can therefore be placed in areas where no such grid is established. Alternatively, the energy buffering plant may be coupled to a local or national electrical power grid for input electrical power. This has the advantage that input electrical energy can be delivered from any intermittent electrical energy source coupled to the power grid. The energy buffering plant may be coupled to a local or national electrical power grid to delivers at least some of its output electrical power. This is favorable for a low capacity or unstable power grid, as the buffering may be used for stabilizing the grid, for example in some developing nations where there is a ransoming of electricity. The energy buffering plant may be coupled directly to a local installation requiring electrical power, thereby allowing for a constant electrical energy supply from an isolated intermittent energy source alone.

The step of placing the energy buffering plant at a location having a supply of the input and a demand for the output may mean that plant is placed at a location where the input can be bought at an input cost being and the output can be sold at an output cost, where the input cost and output costs are approximately the same, or the latter larger than the former. The step of placing the energy buffering plant may also mean that the plant is placed at location where there is an easy access to the input and little or no access to the output; or the step may mean that the input can be acquired at a low price and the output sold at a high price. A producer of the biomass may even pay the plant for getting free of relieved from the biomass, in particular if it is an organic waste product, such as organic domestic waste.

The biomass may be wet biomass containing an amount of water to such degree that it is biodegradable on a seasonal basis, such as animal manure, waste water sludge, grass, organic matter from lakes or water courses, algae from the sea, biodegradable municipal solid waste, and harvested crop from farming. The biomass may be dry biomass containing a lesser amount of water such that it cannot degrade by biological process on a seasonal or yearly basis, for example wood chips and straw. The dry biomass may also be produced from wet biomass that has been dried. The one or more fertilizers may be an organic fertilizer from the processing of the wet biomass, or an inorganic fertilizer from processing of the dry biomass. With the ability to use both wet and dry biomass, there is no requirement for changing the water contents of the biomass prior to its use in the process, which would otherwise add to the complexity of the method.

The stable chemical energy is stable in the sense that it is contained in a stable compound from which it can be extracted after accumulation and storage through chemical processes, such as oxidation.

The collecting of the input may comprise: collecting the input electrical energy at a first demand for or consumption of electrical power; and the distributing of the output from the energy buffering plant comprising: distributing the output electrical energy at second demand for or consumption of electrical power, the second demand or consumption being higher than the first demand or consumption. For example, the first and second demands may be determined by a power value, e.g. in the unit kW, representing the power consumed or needed to heat a greenhouse coupled to the energy buffering plant either directly or via a national grid.

The converting of at least some of the stored chemical energy to the output electrical energy may generate surplus heat, and at least some of the surplus heat may be employed in the converting of at least some of the input electrical energy and at least some of the biomass into stable chemical energy. This feedback will increase the efficiency of the method.

The converting of at least some of the input electrical energy and of at least some of the biomass into stable chemical energy may generate intermediate surplus heat, and at least some of the intermediate surplus heat may be employed in the converting of at least some of the input electrical energy and at least some of the biomass into stable chemical energy, This feedback will further improve the efficiency of the proposed method.

The converting of at least some of the input electrical energy and of at least some of the biomass into stable chemical energy may comprise: dissociating water into oxygen and hydrogen in an electrolysis driven by employing the input electrical energy and generating the intermediate surplus heat; the storing of the chemical energy may comprise: storing the hydrogen; and the converting of at least some of the stored chemical energy may comprise: consuming at least some of the stored hydrogen to generate at least some of the output electrical energy and at least some of the surplus heat.

The electrolysis may be of a single cell type with an anode and a cathode separated from one another to extract the hydrogen and the oxygen without mixing the two gases. The storing of the hydrogen may involve a compression of the gas and a subsequent storage in hydrogen tank. The consuming of the hydrogen may involve a micro-turbine in which the hydrogen is burnt to generate hot gases directly driving the fans of the turbine. The oxygen for the micro-turbine may be provided from the ambient air. The micro-turbine in turn drives an electrical generator to provide the output electrical energy as an alternating current. The consuming may also be in an internal combustion engine coupled directly to an electrical generator to generate the output electrical energy. Alternatively or additionally, the consuming may involve burning by oxygen from the ambient air to heat a boiler system generating the output electrical energy through a heated steam turbine coupled directly to an electrical generator.

Additionally or alternatively, the hydrogen may be consumed in at least one fuel cell. This way the output electrical energy is directly generated as a direct current. The direct current may be converted to an alternating current by an inverter. Alternatively to the electrode electrolysis, the electrolysis may be achieved through proton exchange membrane electrolysis, or another "inverted" fuel cell technology.

The storing of the chemical energy may comprise: cooling the hydrogen by employing at least some of the surplus heat and/or at least some of the intermediate surplus heat. This allows for a storing of the hydrogen in liquid form, with a high overall efficiency of the energy buffering system. The hydrogen tanks may be isolated and also cooled to allow for the storing in liquid form.

The liquid hydrogen has the advantage of higher chemical energy density as compared to the gaseous form

The output may further comprise at least some of the stored hydrogen. The output hydrogen may be to a hydrogen grid for transporting the hydrogen over long distances, or for a local tapping, e.g. for refueling hydrogen powered vehicles.

The converting of at least some of the input electrical energy and of at least some of the biomass into stable chemical energy may comprise: subjecting at least some of the biomass to at least some of the oxygen and to at least some of the surplus heat and/or at least some of the intermediate surplus heat for contributing to a partial oxidation of the biomass to produce synthesis gas; the storing the chemical energy may comprise storing the synthesis gas; and the converting of at least some of the stored chemical energy may comprise: consuming at least some of the stored synthesis gas to generate at least some of the output electrical energy and at least some of the surplus heat. The partial oxidation may produce heat that that also contributes to drive the gasification producing the synthesis gas. However, the supplied heat to the biomass will to some extent drive the oxidation process, which increases the overall efficiency of the system. The main constituents of the synthesis gas are usually hydrogen, carbon monoxide, and a smaller amount of methane. The gasification is particularly suitable for a dry biomass as described above, as a too high water contents can somewhat hinder the gasification process. The storing of the synthesis gas may be in a pressurized gas tank, or in a gas holder or bell. The consuming may involve burning by oxygen from the ambient air to heat a boiler system generating the output electrical energy through a heated steam turbine coupled directly to an electrical generator.

The converting of at least some of the input electrical energy and of at least some of the biomass into stable chemical energy may comprise: controlling the partial oxidation of the biomass to further produce char; and the storing the chemical energy may comprise storing the char; additionally, the converting of at least some of the stored chemical energy may comprise: consuming at least some of the stored char to generate at least some of the output electrical energy and at least some of the surplus heat; and/or the distributing of the output from the energy buffering plant may comprise: including at least some of the stored char in the one or more fertilizers. The char, or charcoal, is an organic product being similar to coke produced by gasification of bituminous coal or black coal broken from the ground. The controlling of the partial oxidation may vary depending on the type of biomass used. For example, one first type of biomass may require more oxygen than a second type of biomass having the same mass as the first mass. The controlling may relay on results of earlier test performed to achieve a certain type or amount of char from a specific type of biomass. The storing of the char may be in weather protected enclosed spacing, e.g. a shed. The consuming may involve burning by oxygen from the ambient air to heat a boiler system generating the output electrical energy through a heated steam turbine coupled directly to an electrical generator.

The converting of at least some of the input electrical energy and of at least some of the biomass into stable chemical energy may comprise: controlling the partial oxidation of the biomass to further produce tar; and the storing the chemical energy may comprise: storing the tar; additionally the converting of at least some of the stored chemical energy may comprise: consuming at least some of the stored tar to generate at least some of the output electrical energy and at least some of the surplus heat. The controlling of the partial oxidation may vary depending on the type of biomass used. For example, one first type of biomass may require more oxygen than a second type of biomass having the same mass as the first mass. The controlling may relay on results of earlier test performed to achieve a certain type or amount of tar from a specific type of biomass. The storing of the tar may be in an airtight container, e.g. in a tank. The consuming may involve burning by oxygen from the ambient air to heat a boiler system generating the output electrical energy through a heated steam turbine coupled directly to an electrical generator. Further, the output may further comprise the tar.

The converting of at least some of the input electrical energy and of at least some of the biomass into stable chemical energy may comprise: controlling the partial oxidation of the biomass to further produce nitrates; and the distributing of the output from the energy buffering plant may comprise: including at least some of the nitrates in the one or more fertilizers. The controlling may relay on results of earlier test performed to achieve a certain type or amount of nitrates from a specific type of biomass.

The converting of at least some of the input electrical energy and of at least some of the biomass into stable chemical energy may comprise: subjecting at least some of the biomass to microorganisms and to at least some of the surplus heat and/or at least some of the intermediate surplus heat for contributing to a biological breakdown of the biomass to produce biogas; the storing of the chemical energy may comprise: storing the biogas; and the converting of at least some of the stored chemical energy may comprise: consuming at least some of the stored biogas to generate at least some of the output electrical energy and at least some of the surplus heat. The biological breakdown and the production may be in a tank for containing and collecting the produced biogas. The storing of the biogas may be in a pressurized gas tank, or in a gas holder or bell The consuming may involve burning by oxygen from the ambient air to heat a boiler system generating the output electrical energy through a heated steam turbine coupled directly to an electrical generator. The microorganisms may primarily be anaerobic digesters producing primarily methane. This is typically achieved at elevated temperatures between 35-60 degrees C, which to some extent may be obtained by the heat supplied to the biomass. The microorganisms may also involve a certain amount of aerobic digesters to achieve a specific residual output more suitable as a fertilizer. A wet biomass as described above is particularly suitable for the biological breakdown, as the high water contents allows for the microorganisms thrive and spread,

The converting of at least some of the input electrical energy and of at least some of the biomass into stable chemical energy may comprise; controlling the biological breakdown of the biomass by subjecting the biomass to at least some of the oxygen generated in the electrolysis. The controlling of the biological breakdown may relay on results of earlier test performed to destroy at least some of the microorganisms in the biomass, e.g. the anaerobic micro-organisms, that may be harmful.

The converting of at least some of the input electrical energy and of at least some of the biomass into stable chemical energy may comprise: controlling the biological breakdown of the biomass to further produce an organic fertilizer; and the distributing of the output from the energy buffering plant may comprise: including at least some of the organic fertilizer in the one or more fertilizers. The controlling of the biological breakdown may relay on results of earlier test performed to obtain an organic fertilizer of a specific type from a specific type of biomass. For example, an initial biological breakdown may be preformed to produce biogas. However, the residual biomass is not suitable as a fertilizer. By subjecting this residual to oxygen and an aerobic digestion, it may be suitable as an organic fertilizer.

The distributing of the output from the energy buffering plant may comprise: including at least some of the surplus heat and/or at least some of the intermediate surplus heat in the output; and distributing the surplus heat and intermediate surplus heat in the output to remote heating. For example, the remote heating may be a heating of a greenhouse at the same location as the energy buffering plant. Additionally or alternatively, the energy buffering may be coupled to a district heating system, to which at least some of its surplus and/or intermediate surplus heat is delivered.

Subsequent to the biological breakdown of the biomass, the electrolysis may be performed directly on the biomass to dissociate water contained therein into the oxygen and the hydrogen. As described above, the electrolysis may be of a single cell type with an anode and a cathode separated from one another to extract the hydrogen and the oxygen without mixing the two gases. A current is allowed to go through the biomass between the anode and the cathode. This may generate an amount of heat sufficient to destroy microorganisms in the residual biomass, thereby making it suitable as an organic fertilizer. Further, the electrolysis may also change the chemical composition of the biomass, thereby making it more favorable as a fertilizer. The wet biomass as described above is particularly suitable for the electrolysis, as the higher water contents allows for an efficient production of oxygen and hydrogen.

The objects, advantages and features are according to a second aspect of the present invention obtained by an energy buffering plant for accumulating input electrical energy from an intermittent electrical energy source having an input comprising the input electrical energy and biomass, and an output comprising output electrical energy and one or more fertilizers, the energy buffering plant being placed at a location having a supply of the input and a demand for the output and comprising: an input collector to collect the input to the energy buffering plant; an input converter to convert at least some of the input electrical energy and at least some of the biomass into stable chemical energy in a process further producing the one or more fertilizers; an accumulator to store the chemical energy; an output converter to convert at least some of the stored chemical energy to the output electrical energy; and an output conveyer to distribute the output from the energy buffering plant

The energy buffering plant may comprise: analysis means (30) to determine the demand for or consumption of electrical power; a regulator to control the input collector and the output conveyor to collect the input electrical energy at a first demand for or consumption of electrical power, and to distribute the output electrical energy at a second demand for or consumption of electrical power, where the second demand or consumption being higher than the first demand or consumption. The output converter may generate surplus heat that is conveyed to the input converter, and the input converter may be adapted to employ at least some of the surplus heat in converting at least some of the input electrical energy and at least some of the biomass into stable chemical energy.

The input converter may generate intermediate surplus heat that is conveyed internally in the input converter to employ at least some of the intermediate surplus heat in converting at least some of the input electrical energy and at least some of the biomass into stable chemical energy.

The input converter may comprise: an electrolyser to dissociate water into oxygen and hydrogen in an electrolysis driven by employing the input electrical energy and generating the intermediate surplus heat; the accumulator may comprise: a hydrogen tank to store the hydrogen; and the output converter may comprise: a first electrical energy producer to generate at least some of the output electrical energy and at least some of the surplus heat by consuming at least some of the stored hydrogen.

The first electrical energy producer may comprise a fuel cell to consume at least some of the stored hydrogen. The accumulator may comprise: a cooler to cool the hydrogen by employing at least some of the surplus heat and/or at least some of the intermediate surplus heat The output conveyer further may comprise a hydrogen outlet to include at least some of the stored hydrogen in the output.

The input converter may comprise; a gasifier to subjecting at least some of the biomass to at least some of the oxygen and to at least some of the surplus heat and/or at least some of the intermediate surplus heat for contributing a partial oxidation of the biomass to produce synthesis gas; the accumulator may comprise: a synthesis gas tank to store the synthesis gas; and the output converter may comprise: a second electrical energy producer to generate at least some of the output electrical energy and at least some of the surplus heat by consuming at least some of the stored synthesis gas.

The gasifier may comprise: a first oxygen supply controller to control the partial oxidation of the biomass to further produce char; and the accumulator may comprise: a solid storage to store the char; additionally the second electrical energy producer may further be adapted to generate at least some of the output electrical energy and at least some of the surplus heat by consuming at least some of the stored char, and/or the output conveyor may further comprise a char outlet to include at least some of the stored char in the one or more fertilizers.

The gasifier may comprise: a second oxygen supply controller to control the partial oxidation of the biomass to further produce tar; and the accumulator may comprise: a liquid tank to store the tar; additionally the second electrical energy producer may further be adapted to generate at least some of the output electrical energy and at least some of the surplus heat by consuming at least some of the stored tar, and/or the output conveyor may further comprise a tar outlet to include at least some of the stored char in the output.

The gasifier may comprise: a third oxygen supply controller to control the partial oxidation of the biomass to further produce nitrates; and the output conveyor may be adapted to including at least some of the nitrates in the one or more fertilizers.

The input converter may comprise: a biogas producer to subject at least some of the biomass to microorganisms and to at least some of the surplus heat and/or at least some of the intermediate surplus heat for contributing to a biological breakdown of the biomass to produce biogas; the accumulator may comprise: a biogas tank to store the biogas; and the second electrical energy producer may further be adapted to generate at least some of the output electrical energy and at least some of the surplus heat by consuming at least some of the stored biogas.

The biogas producer may comprise: a fourth oxygen supply controller to control the biological breakdown of the biomass by subjecting the biomass to at least some of the oxygen generated in the electrolysis. The fourth oxygen supply controller may be adapted to control the biological breakdown of the biomass to further produce a an organic fertilizer; and the output conveyor may be adapted to including at least some of the organic fertilizer in the one or more fertilizers. The output conveyor may be adapted to include at least some of the surplus heat and/or at least some of the intermediate surplus heat in the output and to distribute it to a remote heating.

The electrolyser and the biogas producer may be adapted to subsequent to the biological breakdown of the biomass performed the electrolysis directly on the biomass to dissociate water contained therein into the oxygen and the hydrogen.

All the features described in relation to the first aspect of the present invention may be included in the second aspect of the present invention. The effects and advantages of a particular feature described in relation to the first aspect of the present inventions are also relevant for the corresponding feature of second aspect of the present invention.

### BRIEF DESCRIPTION OF THE DRAWINGS

Additional objects and features according to the present invention will be more readily apparent from the following detailed description and the drawing:

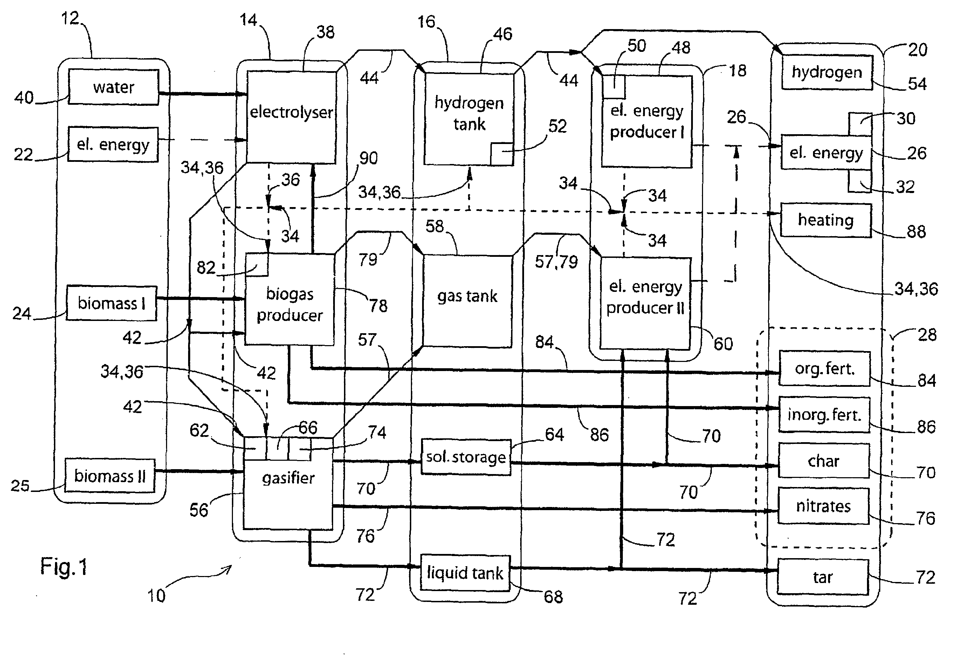

Fig.1 being a schematic view of a preferred embodiment of a system according to the second aspect of the present invention for performing a process according to the method of the first aspect of the present invention.

### DETAILED DESCRIPTION OF THE INVENTION

The system shown in Fig.1 is a schematic illustration of the energy buffering plant 10 according to the present invention. The energy buffering plant 10 has an input collector 12 through which water 40, input electrical energy 22, wet biomass 24, and dry biomass 25 are distributed to the input converter 14 of the plant 10. The input converter is defined by an electrolyser 38 receiving the water 40 and the input electrical energy 22, a biogas producer 78 receiving the wet biomass 24, and a gasifier 56 receiving the dry biomass 25. The electrolyser 38 produces hydrogen 44 and oxygen 42 from the water 40 and the input electrical energy 22. The biogas producer 78 produces a biogas 79 from the wet biomass 24, while the gasifier 56 produces synthesis gas 57 from the dry biomass 25.

The oxygen 42 produced by the electrolyser 38 available to the biogas producer 78 to allow a control of the production of its output. This output also comprises organic fertilizers 84 and inorganic fertilizer 86, or raw-materials for the latter. Naturally, the properties of the fertilizers 84 and 86 depends on the amount of oxygen 42 used by the biogas producer 78 and the nature of the wet biomass 24. The biogas 78 primarily consists of methane.

The oxygen 42 produced by the electrolyser 38 available to the biogas producer 78 is also used in the gasifier 56 to control the partial oxidation of the dry biomass 25, which produces the synthesis gas. 57primarily consisting of hydrogen, carbon monoxide, and a smaller amount of methane.

The electrolyser also produces intermediate surplus heat 36, of which is led to the biogas producer 75 and the gasifier 56. In the biogas producer 78 the heat is used to obtain a favourable temperature of the biomass 24 for the biode-grading microorganisms to produce biogas, typically in the range 35-60 degrees C. In the gasifier 56 the heat is used to increase the temperature of the biomass 25 to drive out combustible volatiles and tar 72 from the biomass. The partial oxidation will then further produce combustible volatiles. The synthesis gas 57 is the extracted from the combustible volatiles. After the partial oxidation the solid residual of the biomass is in the form of char or charcoal 70 that can be used soil improver to increase the carbon contents of the soil. Some of the char is further oxidized to produce nitrates 76.

The biogas producer is provided with a fourth oxygen supply controller 82 to control the biological breakdown of the wet biomass by regulating the amount of oxygen 42 supplied. The gasifier is provided with a first oxygen supply controller 62 to control the production of char 70, a second oxygen supply controller 66 to control the production of tar 72, and a third oxygen supply controller 74 to control the production of nitrates 76 by regulating the supply of oxygen 42 from the electrolyser 38 during the different stages of the gasification. For example, the supplied oxygen level may be such that a significant amount of tar will oxidize before it can be extracted.

The hydrogen 44, the biogas 79 and the synthesis gas 57 is lead to an accumulator 16. The accumulator 16 has a cooled high-pressure hydrogen tank 46 for storing the hydrogen 44 produced by the electrolyser 38 as liquid. The cooling is obtained by a cooler 52 driven by some of the heat 36 from the electrolyser 38. The accumulator 16 also has a medium-pressure gas tank 58 for receiving both the combined biogas 79 and synthesis gas 57, a solid storage 64 in the form of a shed for storing the char 70, and a liquid container 68 for storing the tar 72. The hydrogen 44, biogas 79, synthesis gas 57, char 70, and tar 72 together define the stable chemical energy available as an energy buffer.

Some of the stored hydrogen 44 and the biogas 79 and synthesis gas 57 mixture is lead to an output converter 18. The output converter 18 has a first electric energy producer 48 in the form of a micro-turbine connected to a generator to convert the chemical energy of the hydrogen 44 into output electrical energy 26. Further, the output converter 18 has a second electric energy producer 60 in the form of a gas and solid burner consuming the biogas 79 and synthesis gas 57 mixture, at least some the char 70, and at least some of the tar 72 to heat a boiler giving a pressurized steam driving a turbine connected to a generator to yield output electrical energy 26 in addition to that produced by the first electric energy producer 48. The surplus heat 34 from the first 48 and second 60 electrical energy producers is collected and lead back to the cooler 52, the biogas producer 78, and the gasifier 56.

The biogas producer 78 and the electrolyser 38 are adapted 90 so that an electrolysis can be performed on the biomass after the biological degradation. This produces additional oxygen 42 and hydrogen 44, as well as increasing the temperature and changing the chemical composition of the biomass. The temperature is increased to such a level that harmful microorganisms are destroyed, e.g. to 80 degrees C. The biomass is then extracted as an organic fertilizer 84. The electrolysis can also be performed for such a period of time so that the biomass is turned into an inorganic fertilizer 86, with little or substantially no biological material left.

The hydrogen 44 can be extracted through a hydrogen outlet 54 to fill hydrogen flasks. The output electrical energy 26 can be extracted through a connection or outlet 26 to the national grid. There is also a connection through which 88 some of the surplus heat 34 and 36 can be extracted via a heat exchanger to a district heating tubing. The organic fertilizer 84, inorganic fertilizer 86, char 70, and/or nitrates 76 all define one or more fertilizers 28. The energy buffering system 10 has an output conveyor defined by the outputs for the one or more fertilizers 28, the hydrogen 65, the output electrical energy 26, the heating 88 and the tar 72.

The energy buffering plant 10 is provided with analysis means 30 able to determine and register the electrical power consumed by the national grid. A regulator 32 control the input collector 12 and the output conveyor 20 to collect the input electrical energy 22 at a first demand consumption of electrical power, and to distribute the output electrical energy 26 at a second consumption of electrical power, where the second consumption is set to be higher than the first consumption.

The arrows in Fig.1 indicate the direction in which the associated heat, gas, input, or output is conveyed,

### ITEM LIST

- 10: energy buffering plant
- 12: input/input collector
- 14: input converter
- 16: accumulator
- 18: output converter
- 20: output/output conveyor
- 22: input electrical energy
- 24: biomass
- 26: output electrical energy
- 28: fertilizers
- 30: analysis means
- 32: regulator
- 34: surplus heat
- 36: intermediate surplus heat
- 38: electrolyser
- 40: water
- 42: oxygen
- 44: hydrogen
- 46: hydrogen tank
- 48: first electrical energy producer
- 50: fuel cell
- 52: cooler
- 54: hydrogen outlet
- 56: gasifier
- 57: synthesis gas
- 58: gas tanks
- 60: second electrical energy producer
- 62: first oxygen supply controller
- 64: solid storage
- 66: second oxygen supply controller
- 68: liquid tank
- 70: char
- 72: tar
- 74: third oxygen supply controller
- 76: nitrates
- 78: biogas producer
- 79: biogas
- 82: fourth oxygen supply controller
- 84: organic fertilizer
- 86: inorganic fertilizer
- 88: remote heating
- 90: biomass water

## Claims

1. A method for accumulating input electrical energy (22) from an intermittent electrical energy source by an energy buffering plant (10) having an input comprising said input electrical energy (22) and biomass (24, 25), and an output comprising output electrical energy (26) and one or more fertilizers (28), said method comprising:
placing said energy buffering plant (10) at a location having a supply of said input and a demand for said output,
collecting (12) said input to said energy buffering plant (10),
converting (14) at least some- of said input electrical energy (22) and at least some of said biomass (24, 25) into stable chemical energy in a process further producing said one or more fertilizers (28),
storing (16) said chemical energy,
converting (18) at least some of said stored chemical energy to said output electrical energy (26), and
distributing (20) said output from said energy buffering plant (10), **characterized by** said converting (14) of at least some of said input electrical energy (22) and of at least some of said biomass (24, 25) into stable chemical energy generating intermediate surplus heat (36), and at least some of said intermediate surplus heat (36) being employed in said converting (14) of at least some of said input electrical energy (22) and at least some-of said biomass (24, 25) into stable chemical energy.

2. The method according claim 1 **characterized by** said converting (18) of at least some of said stored chemical energy to said output electrical energy (26) generating surplus heat (34), and at least some of said surplus heat (34) being employed in said converting (14) of at least some of said input electrical energy (22) and at least some of said biomass (24, 25) into stable chemical energy.

3. The method according to claim 1 **characterized by** said converting (14) of at least some of said input electrical energy (22) and of at least some of said biomass (24, 25) into stable chemical energy comprising:
dissociating water (40) into oxygen (42) and hydrogen (44) in an electrolysis driven by employing said input electrical energy (22) and generating said intermediate surplus heat (36),
said storing (16) of said chemical energy comprising:
storing said hydrogen (44), and
said converting (18) of at least some of said stored chemical energy comprising:
consuming at least some of said stored hydrogen (44) to generate at least some of said output electrical energy (26) and at least some of said surplus heat (34).

4. The method according to claim 3 **characterized by** said output further comprising at least some of said stored hydrogen (44).

5. The method according to claim 3 or 4 **characterized by** said converting (14) of at least some of said input electrical energy (22) and of at least some of said biomass (24, 25) into stable chemical energy comprising:
subjecting at least some of said biomass (24, 25) to at least some of said oxygen (42) and to at least some of said surplus heat (34) and/or at least some of said intermediate surplus heat (36) for contributing to a partial oxidation of said biomass (24, 25) to produce synthesis gas (57),
said storing (16) of said chemical energy comprising:
storing said synthesis gas (57), and
said converting (18) of at least some of said stored chemical energy comprising:
consuming at least some of said stored synthesis gas (57) to generate at least some of said output electrical energy (26) and at least some of said surplus heat (34).

6. The method according to claim 5 **characterized by** said converting (14) of at least some of said input electrical energy (22) and of at least some of said biomass (24, 25) into stable chemical energy comprising:
controlling said partial oxidation of said biomass (24, 25) to further produce nitrates (76), and
said distributing (20) of said output from said energy buffering plant (10) comprising:
including at least some of said nitrates (76) in said one or more fertilizers (28).

7. The method according to any of the claims 2 to 6 **characterized by** said converting (14) of at least some of said input electrical energy (22) and of at least some of said biomass (24, 25) into stable chemical energy comprising:
subjecting at least some of said biomass (24, 25) to microorganisms and to at least some of said surplus heat (34) and/or at least some of said intermediate surplus heat (36) for contributing to a biological breakdown of said biomass (24, 25) to produce biogas (79),
said storing (16) of said chemical energy comprising:
storing said biogas (79), and
said converting (18) of at least some of said stored chemical energy comprises:
consuming at least some of said stored biogas (79) to generate at least some of said output electrical energy (26) and at least some of said surplus heat (34).

8. The method according to any of the claims 2 to 7 **characterized by** said converting (14) of at least some of said input electrical energy (22) and of at least some of said biomass (24, 25) into stable chemical energy comprising:
controlling said biological breakdown of said biomass (24, 25) by subjecting said biomass (24, 25) to at least some of said oxygen (42) generated in said electrolysis.

9. A energy buffering plant (10) for accumulating input electrical energy (22) from an intermittent electrical energy source having an input comprising said input electrical energy (22) and biomass (24, 25), and an output comprising output electrical energy (26) and one or more fertilizers (28), said energy buffering plant (10) being placed at a location having a supply of said input and a demand for said output and comprising:
an input collector (12) to collect said input to said energy buffering plant (10),
an input converter (14) to convert at least some of said input electrical energy (22) and at least some of said biomass (24, 25) into stable chemical energy in a process further producing said one or more fertilizers (28),
an accumulator (16) to store said chemical energy,
an output converter (18) to convert at least some of said stored chemical energy to said output electrical energy (26), and
an output conveyer to distribute said output from said energy buffering plant (10),
**characterized by** said input converter (14) generating intermediate surplus heat (36) that is conveyed internally in said input converter (14) to employ at least some of said intermediate surplus heat (36) in converting at least some of said input electrical energy (22) and at least some of said biomass (24, 25) into stable chemical energy.

10. The energy buffering plant (10) according to claim 9 **characterized by** said output converter (18) generating surplus heat (34) that is conveyed to said input converter (14), and said input converter (14) being adapted to employ at least some of said surplus heat (34) in converting at least some of said input electrical energy (22) and at least some of said biomass (24, 25) into stable chemical energy.

11. The energy buffering plant (10) according to claim 10 **characterized by** said input converter (14) comprising:
an electrolyser (38) to dissociate water(40) into oxygen (42) and hydrogen (44) in an electrolysis driven by employing said input electrical energy (22) and generating said intermediate surplus heat (36),
said accumulator (16) comprising:
a hydrogen tank to store said hydrogen (44), and
said output converter (18) comprising:
a first electrical energy producer (48) to generate at least some of said output electrical energy (26) and at least some of said surplus heat (34) by consuming at least some of said stored hydrogen (44).

12. The energy buffering plant (10) according to claim 11 **characterized by** said output conveyer further comprising a hydrogen outlet (54) to include at least some of said stored hydrogen (44) in said output.

13. The energy buffering plant (10) according to claim 10, 11 or 12 **characterized by** said input converter (14) comprising:
a gasifier (56) to subject at least some of said biomass (24, 25) to at least some of said oxygen (42) and to at least some of said surplus heat (34) and/or at least some of said intermediate surplus heat (36) for contributing to a partial oxidation of said biomass (24, 25) to produce synthesis gas (57),
said accumulator (16) comprising:
a synthesis gas tank (58) to store said synthesis gas (57), and
said output converter (18) comprising:
a second electrical energy producer (60) to generate at least some of said output electrical energy (26) and at least some of said surplus heat (34) by consuming at least some of said stored synthesis gas (57).

14. The energy buffering plant (10) according to claim 13 **characterized by** said gasifier (56) comprising:
a third oxygen supply controller (74) to control said partial oxidation of said biomass (24, 25) to further produce nitrates (76), and:
said output conveyor (20) being adapted to including at least some of said nitrates (76) in said one or more fertilizers (28).

15. The energy buffering plant (10) according to any of the claims 11 to 14 **characterized by** said input converter (14) comprising:
a biogas producer (78) to subject at least some of said biomass (24, 25) to microorganisms and to at least some of said surplus heat (34) and/or at least some of said intermediate surplus heat (36) for contributing to a biological breakdown of said biomass (24, 25) to produce biogas (79),
said accumulator (16) comprising:
biogas tank (58) to store said biogas (79), and:
said second electrical energy producer (60) further being adapted to generate at least some of said output electrical energy (26) and at least some of said surplus heat (34) by consuming at least some of said stored biogas (79).

## Patentansprüche

1. Verfahren zum Akkumulieren eingehender elektrischer Energie (22) von einer intermittierenden elektrischen Energiequelle durch eine Energiepufferanlage (10) mit einem Eingang umfassend die eingehende elektrische Energie (22) und Biomasse (24, 25) und einem Ausgang umfassend ausgehende elektrische Energie (26) und ein oder mehrere Düngemittel (28), wobei das Verfahren umfasst:
Anordnen der Energiepufferanlage (10) an einer Stelle mit einer Zufuhr des Eingangs und einer Nachfrage nach dem Ausgang,
Sammeln (12) des Eingangs zur Energiepufferanlage (10),
Umwandeln (14) wenigstens eines Teils der eingehenden elektrischen Energie (22) und wenigstens eines Teils der Biomasse (24, 25) in stabile chemische Energie in einem Prozess, der zusätzlich ein oder mehrere Düngemittel (28) erzeugt,
Speichern (16) der elektrischen Energie,
Umwandeln (18) wenigstens eines Teils der gespeicherten chemischen Energie in die ausgehende elektrische Energie (26), und
Verteilen (20) des Ausgangs von der Energiepufferanlage (10),
**dadurch gekennzeichnet, dass** das Umwandeln (14) wenigstens eines Teils der eingehenden elektrischen Energie (22) und wenigstens eines Teils der Biomasse (24, 25) in stabile chemische Energie intermediäre überschüssige Wärme (36) erzeugt, und wenigstens ein Teil der intermediären überschüssigen Wärme (36) beim Umwandeln (14) wenigstens eines Teils der eingehenden elektrischen Energie (22) und wenigstens eines Teils der Biomasse (24, 25) in stabile chemische Energie (26) eingesetzt wird.

2. Verfahren nach Anspruch 1, **dadurch gekennzeichnet, dass** das Umwandeln (18) wenigstens eines Teils der gespeicherten chemischen Energie in die ausgehende elektrische Energie (26) überschüssige Wärme (34) erzeugt, und wenigstens ein Teil der überschüssigen Wärme (34) beim Umwandeln (14) wenigstens eines Teils der eingehenden elektrischen Energie (22) und wenigstens eines Teils der Biomasse (24, 25) in stabile chemische Energie (26) eingesetzt wird.

3. Verfahren nach Anspruch 1, **dadurch gekennzeichnet, dass** das Umwandeln (14) wenigstens eines Teils der eingehenden elektrischen Energie (22) und wenigstens eines Teils der Biomasse (24, 25) in stabile chemische Energie (26) umfasst:
Dissoziieren von Wasser (40) in Oxygen (42) und Hydrogen (44) in einer Elektrolyse angetrieben durch Anwendung der eingehenden elektrischen Energie (22) und Erzeugung der intermediären überschüssigen Wärme (36),
wobei das Speichern (16) der chemischen Energie umfasst:
Speichern des Hydrogens (44), und
wobei das Umwandeln (18) wenigstens eines Teils der gespeicherten chemischen Energie umfasst:
Verbrauchen wenigstens eines Teils des gespeicherten Hydrogens (44) zum Erzeugen wenigstens eines Teils der ausgehenden elektrischen Energie (26) und wenigstens eines Teils der überschüssigen Wärme (34).

4. Verfahren nach Anspruch 3, **dadurch gekennzeichnet, dass** der Ausgang ferner wenigstens einen Teil des gespeicherten Hydrogens (44) umfasst.

5. Verfahren nach Anspruch 3 oder 4, **dadurch gekennzeichnet, dass** das Umwandeln (14) wenigstens eines Teils der eingehenden elektrischen Energie (22) und wenigstens eines Teils der Biomasse (24, 25) in stabile chemische Energie umfasst:
Unterwerfen wenigstens eines Teils der Biomasse (24, 25) wenigstens einem Teil des Oxygens (42) und wenigstens einem Teil der überschüssigen Wärme (34) und/ oder wenigstens einem Teil der intermediären überschüssigen Wärme (36) zum Beitragen zu einer partiellen Oxidation der Biomasse (24, 25), um Synthesegas (57) herzustellen,
wobei das Speichern (16) der chemischen Energie umfasst:
Speichern des Synthesegases (57),
wobei das Umwandeln (18) wenigstens eines Teils der gespeicherten chemischen Energie umfasst:
Verbrauchen wenigstens eines Teils des gespeicherten Synthesegases (57) zum Erzeugen wenigstens eines Teils der ausgehenden elektrischen Energie (26) und wenigstens eines Teils der überschüssigen Wärme (34).

6. Verfahren nach Anspruch 5, **dadurch gekennzeichnet, dass** das Umwandeln (14) wenigstens eines Teils der eingehenden elektrischen Energie (22) und wenigstens eines Teils der Biomasse (24, 25) in stabile chemische Energie (26) umfasst:
Steuern der partiellen Oxidation der Biomasse (24, 25), um ferner Nitrate (76) herzustellen, und
wobei das Verteilen (20) des Ausgangs von der Energiepufferanlage (10) umfasst:
Einschließen wenigstens eines Teils der Nitrate (76) in das eine oder mehrere Düngemittel (28).

7. Verfahren nach einem der Ansprüche 2 bis 6, **dadurch gekennzeichnet, dass** das Umwandeln (14) wenigstens eines Teils der eingehenden elektrischen Energie (22) und wenigstens eines Teils der Biomasse (24, 25) in stabile chemische Energie (26) umfasst:
Unterwerfen wenigstens eines Teils der Biomasse (24, 25) Mikroorganismen und wenigstens einem Teil der überschüssigen Wärme (34) und/oder wenigstens einem Teil der intermediären überschüssigen Wärme (36) zum Beitragen zu einer biologischen Zersetzung der Biomasse (24, 25), um Biogas (79) herzustellen,
wobei das Speichern (16) der chemischen Energie umfasst:
Speichern des Biogases (79), und
wobei das Umwandeln (18) wenigstens eines Teils der gespeicherten chemischen Energie umfasst:
Verbrauchen wenigstens eines Teils des gespeicherten Biogases (79) zum Erzeugen wenigstens eines Teils der ausgehenden elektrischen Energie (26) und wenigstens eines Teils der überschüssigen Wärme (34).

8. Verfahren nach einem der Ansprüche 2 bis 7, **dadurch gekennzeichnet, dass** das Umwandeln (14) wenigstens eines Teils der eingehenden elektrischen Energie (22) und wenigstens eines Teils der Biomasse (24, 25) in stabile chemische Energie (26) umfasst:
Steuern der biologischen Zersetzung der Biomasse (24, 25) durch Unterwerfen der Biomasse (24, 25) wenigstens einem Teil des in der Elektrolyse erzeugten Oxygens (42).

9. Energiepufferanlage (10) zum Akkumulieren eingehender elektrischer Energie (22) von einer intermittierenden elektrischen Energiequelle mit einem Eingang umfassend die eingehende elektrische Energie (22) und Biomasse (24, 25) und einem Ausgang umfassend ausgehende elektrische Energie (26) und ein oder mehrere Düngemittel (28), wobei die Energiepufferanlage (10) an einer Stelle mit einer Zufuhr des Eingangs und einer Nachfrage nach dem Ausgang angeordnet ist und umfassend:
einen Sammler (12) zum Sammeln des Eingangs zur Energiepufferanlage (10),
einen Eingangswandler (14) zum Umwandeln wenigstens eines Teils der eingehenden elektrischen Energie (22) und wenigstens eines Teils der Biomasse (24, 25) in stabile chemische Energie in einem Prozess, der zusätzlich ein oder mehrere Düngemittel (28) erzeugt,
einen Akkumulator (16) zum Speichern der chemischen Energie,
einen Ausgangswandler (18) zum Umwandeln wenigstens eines Teils der gespeicherten chemischen Energie in die ausgehende elektrische Energie (26), und
einen Ausgangsförderer zum Verteilen des Ausgangs von der Energiepufferanlage (10),
**dadurch gekennzeichnet, dass** der Eingangswandler (14) intermediäre überschüssige Wärme (36) erzeugt, die intern im Eingangswandler (14) gefördert wird zum Einsetzen wenigstens eines Teils der intermediären überschüssigen Wärme (36) beim Umwandeln (14) wenigstens eines Teils der eingehenden elektrischen Energie (22) und wenigstens eines Teils der Biomasse (24, 25) in stabile chemische Energie (26).

10. Energiepufferanlage (10) nach Anspruch 9, **dadurch gekennzeichnet, dass** der Ausgangswandler (18) überschüssige Wärme (34) erzeugt, die zum Eingangswandler (14) gefördert wird, und wobei der Eingangswandler (14) dazu geeignet ist, wenigstens einen Teil der überschüssigen Wärme (34) beim Umwandeln (14) wenigstens eines Teils der eingehenden elektrischen Energie (22) und wenigstens eines Teils der Biomasse (24, 25) in stabile chemische Energie einzusetzen.

11. Energiepufferanlage (10) nach Anspruch 10, **dadurch gekennzeichnet, dass** der Eingangswandler (14) umfasst:
ein Elektrolyseapparat (38) zum Dissoziieren von Wasser (40) in Oxygen (42) und Hydrogen (44) in einer Elektrolyse angetrieben durch Anwendung der eingehenden elektrischen Energie (22) und Erzeugung der intermediären überschüssigen Wärme (36),
wobei der Akkumulator (16) umfasst:
einen Hydrogenbehälter zum Speichern des Hydrogens (44), und
wobei der Ausgangswandler (18) umfasst:
einen ersten elektrischen Energieerzeuger (48) zum Erzeugen wenigstens eines Teils der ausgehenden elektrischen Energie (26) und wenigstens eines Teils der überschüssigen Wärme (34) durch Verbrauchen wenigstens eines Teils des gespeicherten Hydrogens (44).

12. Energiepufferanlage (10) nach Anspruch 11, **dadurch gekennzeichnet, dass** der Ausgangsförderer ferner einen Hydrogenauslass (54) umfasst zum Einschließen wenigstens eines Teils des gespeicherten Hydrogens (44) in den Auslass.

13. Energiepufferanlage (10) nach Anspruch 10, 11 oder 12, **dadurch gekennzeichnet, dass** der Eingangswandler (14) umfasst:
einen Vergaser (56) zum Unterwerfen wenigstens eines Teils der Biomasse (24, 25) wenigstens einem Teil des Oxygens (42) und wenigstens einem Teil der überschüssigen Wärme (34) und/oder wenigstens einem Teil der intermediären überschüssigen Wärme (36), zum Beitragen zu einer partiellen Oxidation der Biomasse (24, 25), um Synthesegas (57) herzustellen,
wobei der Akkumulator (16) umfasst:
einen Synthesegasbehälter (58) zum Speichern des Synthesegases (57) wobei der Ausgangswandler (18) umfasst:
einen zweiten elektrischen Energieerzeuger (60) zum Erzeugen wenigstens eines Teils der ausgehenden elektrischen Energie (26) und wenigstens eines Teils der überschüssigen Wärme (34) durch Verbrauchen wenigstens eines Teils des gespeicherten Synthesegases (57).

14. Energiepufferanlage (10) nach Anspruch 13, **dadurch gekennzeichnet, dass** der Vergaser (56) umfasst:
eine dritte Oxygenzufuhrsteuerung (74) zum Steuern der partiellen Oxidation der Biomasse (24, 25), um ferner Nitrate (76) herzustellen, und:
wobei der Ausgangsförderer (20) dazu geeignet ist, wenigstens einen Teil der Nitrate (76) in das eine oder mehrere Düngemittel (28) einzuschließen.

15. Energiepufferanlage (10) nach einem der Ansprüche 11 bis 14, **dadurch gekennzeichnet, dass** der Eingangswandler (14) umfasst:
einen Biogaserzeuger (78) zum Unterwerfen wenigstens eines Teils der Biomasse (24, 25) Mikroorganismen und wenigstens einem Teil der überschüssigen Wärme (34) und/oder wenigstens einem Teil der intermediären überschüssigen Wärme (36), zum Beitragen zu einer biologischen Zersetzung der Biomasse (24, 25), um Biogas (79) herzustellen,
wobei der Akkumulator (16) umfasst:
einen Biogasbehälter (58) zum Speichern des Biogases (79), und:
wobei der zweite elektrische Energieerzeuger (60) ferner dazu geeignet ist, wenigstens einen Teil der ausgehenden elektrischen Energie (26) und wenigstens einen Teil der überschüssigen Wärme (34) durch Verbrauchen wenigstens eines Teils des gespeicherten Biogases (79) zu erzeugen.

## Revendications

1. Procédé d'accumulation de l'énergie électrique d'entrée (22) à partir d'une source d'énergie électrique intermittente par une installation de réserve d'énergie (10) ayant une entrée comprenant ladite énergie électrique d'entrée (22) et de la biomasse (24, 25), et une sortie comprenant de l'énergie électrique de sortie (26) et au moins un fertilisant (28), le procédé comprenant:
le placement de ladite installation de réserve d'énergie (10) à un emplacement ayant une fourniture de ladite entrée et une demande pour ladite sortie,
la récolte (12) de ladite entrée à ladite installation de réserve d'énergie (10),
la conversion (14) d'au moins une partie de ladite énergie électrique d'entrée (22) et d'au moins une partie de ladite biomasse (24, 25) en de l'énergie chimique stable dans un processus produisant en outre ledit au moins un fertilisant (28),
le stockage (16) de ladite énergie chimique,
la conversion (18) d'au moins une partie de ladite énergie chimique stockée à ladite énergie électrique de sortie (26), et
la distribution (20) de ladite sortie à partir de ladite installation de réserve d'énergie (10),
**caractérisé en ce que** ladite conversion (14) d'au moins une partie de ladite énergie électrique d'entrée (22) et d'au moins une partie de ladite biomasse (24, 25) en de l'énergie chimique stable génère de la chaleur en excès intermédiaire (36), et au moins une partie de ladite chaleur en excès intermédiaire (36) étant employée dans ladite conversion (14) d'au moins une partie de ladite énergie électrique d'entrée (22) et d'au moins une partie de ladite biomasse (24, 25) en de l'énergie chimique stable.

2. Procédé selon la revendication 1 **caractérisé en ce que** ladite conversion (18) d'au moins une partie de ladite énergie chimique stockée à ladite énergie électrique de sortie (26) génère de la chaleur en excès (34), et au moins une partie de ladite chaleur en excès (34) étant employée dans ladite conversion (14) d'au moins une partie de ladite énergie électrique d'entrée (22) et au moins une partie de ladite biomasse (24, 25) en de l'énergie chimique stable.

3. Procédé selon la revendication 1 **caractérisé en ce que** ladite conversion (14) d'au moins une partie de ladite énergie électrique d'entrée (22) et d'au moins une partie de ladite biomasse (24, 25) en de l'énergie chimique stable comprend:
la dissociation de l'eau (40) en oxygène (42) et en hydrogène (44) en une électrolyse entrainée en employant ladite énergie électrique d'entrée (22) et générant ladite chaleur en excès intermédiaire (36),
ledit stockage (16) de ladite énergie chimique comprenant:
le stockage dudit hydrogène (44), et
ladite conversion (18) d'au moins une partie de ladite énergie chimique comprenant:
la consommation d'au moins une partie dudit hydrogène stocké (44) pour générer au moins une partie de ladite énergie électrique de sortie (26) et au moins une partie de ladite chaleur en excès (34).

4. Procédé selon la revendication 3 **caractérisé en ce que** ladite sortie comprend en outre au moins une partie dudit hydrogène stocké (44).

5. Procédé selon l'une des revendications 3 ou 4 **caractérisé par** ladite conversion (14) d'au moins une partie de ladite énergie électrique d'entrée (22) et d'au moins une partie de ladite biomasse (24, 25) en de l'énergie chimique stable comprenant:
la soumission d'au moins une partie de ladite biomasse (24, 25) à au moins une partie dudit oxygène (42) et à au moins une partie de ladite chaleur en excès (34) et/ou au moins une partie de ladite chaleur en excès intermédiaire (36) afin de contribuer à une oxydation partielle de ladite biomasse (24, 25) pour produire du gaz de synthèse (57),
ledit stockage (16) de ladite énergie chimique comprenant:
le stockage dudit gaz de synthèse (57), et
ladite transmission (18) d'au moins une partie de ladite énergie chimique stockée comprenant:
la consommation d'au moins une partie dudit gaz de synthèse stocké (57) pour générer au moins une partie de ladite énergie électrique de sortie (26) et au moins une partie de ladite chaleur en excès (34).

6. Procédé selon la revendication 5 **caractérisé par** ladite transmission (14) d'au moins une partie de ladite énergie électrique d'entrée (22) et d'au moins une partie de ladite biomasse (24, 25) en de l'énergie chimique stable comprenant:
le contrôle de ladite oxydation partielle de ladite biomasse (24, 25) afin encore de produire des nitrates (76), et
ladite distribution (20) de ladite sortie à partir de ladite installation de réserve d'énergie (10) comprenant:
l'inclusion d'au moins une partie desdites nitrates (76) dans au moins un fertilisant (28).

7. Procédé selon l'une quelconque des revendications 2 à 6 **caractérisé par** ladite conversion (14) d'au moins une partie de ladite énergie électrique d'entrée (22) et d'au moins une partie de ladite biomasse (24, 25) en de l'énergie chimique stable comprenant:
la soumission d'au moins une partie de ladite biomasse (24, 25) à des microorganismes et à au moins une partie de ladite chaleur en excès (34) et/ou au moins une partie de ladite chaleur en excès intermédiaire (36) pour contribuer à une décomposition biologique de ladite biomasse (24, 25) afin de produire du biogaz (79), ledit stockage (16) de ladite énergie chimique comprenant:
le stockage dudit biogaz (79), et
ladite transmission (18) d'au moins une partie de ladite énergie chimique stockée comprenant:
la consommation d'au moins une partie dudit biogaz stocké (79) afin de générer au moins une partie de ladite énergie électrique de sortie (26) et au moins une partie de ladite chaleur en excès (34).

8. Procédé selon l'une quelconque des revendications 2 à 7, **caractérisé en ce que** ladite transmission (14) d'au moins une partie de ladite énergie électrique d'entrée (22) et d'au moins une partie de ladite biomasse (24, 25) en de l'énergie chimique stable comprend:
le contrôle de ladite décomposition biologique de ladite biomasse (24, 25) en soumettant ladite biomasse (24, 25) à au moins une partie dudit oxygène (42) généré dans ladite électrolyse.

9. Une installation de réserve d'énergie (10) pour accumuler l'énergie électrique d'entrée (22) à partir d'une source d'énergie électrique intermittente ayant une entrée comprenant ladite énergie électrique d'entrée (22) et ladite biomasse (24, 25), et une sortie comprenant de l'énergie électrique de sortie (26) et au moins un fertilisant (28), ladite installation de réserve d'énergie (10) étant placée à un emplacement ayant une fourniture de ladite entrée et une demande pour ladite sortie et comprenant:
une récolte d'entrée (12) pour récolter ladite entrée à ladite installation de réserve d'énergie (10),
un convertisseur d'entrée (14) pour convertir au moins une partie de ladite énergie électrique d'entrée (22) et au moins une partie de ladite biomasse (24, 25) en de l'énergie chimique stable dans un processus produisant en outre ledit au moins un fertilisant (28),
un accumulateur (16) pour stocker ladite énergie chimique,
un convertisseur de sortie (18) pour convertir au moins une partie de l'énergie chimique stockée à ladite énergie électrique de sortie (26), et
un transporteur de sortie pour distribuer ladite sortie à partir de ladite installation de réserve d'énergie (10),
**caractérisé en ce que** ledit convertisseur d'entrée (14) génère ladite chaleur en excès intermédiaire (36) qui est transportée à l'intérieur dudit convertisseur d'entrée (14) pour employer au moins une partie de ladite chaleur en excès intermédiaire (36) en convertissant au moins une partie de ladite énergie électrique d'entrée (22) et au moins une partie de ladite biomasse (24, 25) en de l'énergie chimique stable.

10. Installation de réserve d'énergie (10) selon la revendication 9 **caractérisée en ce que** ledit convertisseur de sortie (18) génère de la chaleur en excès (34) qui est transportée audit convertisseur d'entrée (14), et ledit convertisseur d'entrée (14) étant adapté à employer au moins une partie de ladite chaleur en excès (34) en convertissant au moins une partie de ladite énergie électrique d'entrée (22) et au moins une partie de ladite biomasse (24, 25) en de l'énergie chimique stable.

11. Installation de réserve d'énergie (10) selon la revendication 10 **caractérisée en ce que** ledit convertisseur d'entrée (14) comprend:
une électrolyse (38) pour dissocier de l'eau (40) en de l'oxygène (42) et de l'hydrogène (44) dans une électrolyse entrainée en employant ladite énergie électrique d'entrée (22) et générant ladite chaleur en excès intermédiaire (36),
ledit accumulateur (16) comprenant:
un réservoir d'hydrogène pour stocker ledit hydrogène (44), et
ledit convertisseur de sortie (18) comprenant:
un premier producteur d'énergie électrique (48) pour générer au moins une partie de ladite énergie électrique de sortie (26) et au moins une partie de ladite chaleur en excès (34) en consommant au moins une partie dudit hydrogène stocké (44).

12. Installation de réserve d'énergie (10) selon la revendication 11 **caractérisée en ce que** ledit transporteur de sortie comprend en outre une sortie d'hydrogène (54) pour inclure au moins une partie dudit hydrogène stocké (44) dans ladite sortie.

13. Installation de réserve d'énergie (10) selon l'une des revendications 10, 11 ou 12 **caractérisée en ce que** ledit convertisseur d'entrée (14) comprend:
un gazogène (56) pour soumettre au moins une partie de ladite biomasse (24, 25) à au moins une partie dudit oxygène (42) et à au moins une partie de ladite chaleur en excès (34) et/ou au moins une partie de ladite chaleur en excès intermédiaire (36) pour contribuer à une oxydation partielle de ladite biomasse (24, 25) afin de produire du gaz de synthèse (57),
ledit accumulateur (16) comprenant:
un réservoir de gaz de synthèse (58) pour stocker ledit gaz de synthèse (57), et ledit convertisseur de sortie (18) comprenant:
un deuxième producteur d'énergie électrique (60) pour générer au moins une partie de ladite énergie électrique de sortie (26) et au moins une partie de ladite chaleur en excès (34) en consommant au moins une partie dudit gaz de synthèse stocké (57).

14. Installation de réserve d'énergie (10) selon la revendication 13 **caractérisée en ce que** ledit gazogène (56) comprend:
un troisième contrôleur en alimentation d'oxygène (74) pour contrôler ladite oxydation partielle de ladite biomasse (24, 25) pour encore produire des nitrates (76), et:
ledit transporteur de sortie (20) étant adapté pour inclure au moins une partie desdites nitrates (76) dans lesdits au moins un fertilisant (28).

15. Installation de réserve d'énergie (10) selon l'une quelconque des revendications 11 à 14, **caractérisée en ce que** ledit convertisseur d'entrée (14) comprend:
un producteur de biogaz (78) pour soumettre au moins une partie de ladite biomasse (24, 25) à des microorganismes et à au moins une partie de ladite chaleur en excès (34) et/ou au moins une partie de ladite chaleur en excès intermédiaire (36) afin de contribuer à une décomposition biologique de ladite biomasse (24, 25) pour produire du biogaz (79),
ledit accumulateur (16) comprenant:
un réservoir à biogaz (58) pour stocker ledit biogaz (79), et:
ledit deuxième producteur d'énergie électrique (60) étant en outre adapté pour générer au moins une partie de ladite énergie électrique de sortie (26) et au moins une partie de ladite chaleur en excès (34) en consommant au moins une partie dudit biogaz stocké (79).
